# DEMANDE DE BREVET EUROPEEN

(11) **EP 1 350 678 A1**
(43) Date de publication de la demande: **08.10.2003**
(21) Numéro de dépôt: 03290592.9
(22) Date de dépôt: 11.03.2003
(51) Int. Cl.: B60R 13/01

(54) **Système de protection notamment pour véhicule de transport**

(30) Priorité: 15.03.2002 FR 0203286
(71) Demandeur: Jamet, Philippe, 91540 Ormoy (FR)
(72) Inventeur: Jamet, Philippe, 91540 Ormoy (FR)
(74) Mandataire: Pontet, Bernard

(57) **Abrégé**

Système modulaire (10) pour protéger des chocs l'intérieur d'un véhicule (1) de transport de fret, où chaque module est constitué d'un panneau (11) aisément démontable et interchangeable.

## Description

La présente invention concerne un système de protection, notamment pour véhicule de transport, en particulier pour véhicules utilitaire ou commercial.

Les véhicules utilitaires, par exemple du type camionnette ou fourgon, sont livrés avec des parois intérieures nues. C'est à dire qu'à l'intérieur du véhicule, dans la partie utile servant au chargement et au transport de fret, les parois sont des tôles de carrosserie apparentes tant à l'intérieur qu'à l'extérieur du véhicule. Ces tôles sont de faible épaisseur, généralement deux dixièmes de millimètres, et d'une surface importante. Elles sont donc fragiles et sensibles aux chocs, en particulier ceux en provenance des charges transportées. Elles doivent donc être protégées sous peine d'être déformées et cabossées, ce qui nuit à l'esthétique extérieure du véhicule.

L'habillage intérieur d'un véhicule avec des panneaux de protection est souvent coûteux et complexe. Les documents WO 95/25661 et EP 0570183 présentent de tels habillages, qui doivent être fait sur mesure, et nécessitent souvent la réalisation de gabarits complexes, comme présenté dans le document FR 95 03900. Cet habillage peut être en bois. Cependant, pour s'adapter parfaitement aux formes de la partie utile du véhicule, il doit être réalisé en matériau moulable, comme présenté dans le document WO 96/15922, ce qui en augmente le coût.

De plus les habillages existants sont difficilement démontables, par exemple pour leur entretien, leur remplacement ou encore pour changer la destination de la partie utile du véhicule, provisoirement ou définitivement. L'usure des systèmes de fixation, par exemple avec des boulons sur une structure métallique du véhicule, rend l'habillage bruyant lorsque le véhicule roule.

Le but de l'invention est de proposer un système de protection simple de mise en oeuvre, bon marché et adaptable sur un grand nombre de véhicules différents et adaptable à d'autres situations que la protection des véhicules.

Selon l'invention, un tel système de protection, notamment pour l'intérieur d'un véhicule, est caractérisé en ce qu'il est modulaire et composé de panneaux comprenant des moyens pour être accrochés contre une paroi, coopérant avec des moyens pour maintenir lesdits panneaux solidaires de la paroi.

Selon un autre aspect, l'invention concerne un panneau susceptible d'être mis en oeuvre dans un tel système, particulièrement un panneau de protection comprenant des moyens d'accrochage sur une paroi, notamment dans un véhicule.

Chaque panneau formant un module du système de protection modulaire peut être changé individuellement, par exemple en cas de détérioration due à un choc. Les moyens d'accrochages permettent un changement plus simple que dans le cas de panneaux de l'art antérieur, fixés au véhicule, par exemple à l'aide de boulons.

Les moyens de maintien et d'accrochage peuvent comprendre un complexe agrippant, par exemple de type Velcro™ dont un composant est fixé au véhicule et un autre composant est fixé au panneau.

D'autres particularités et avantages de l'invention ressortiront encore de la description ci-après, relative à des exemples non limitatifs.

Aux dessins annexés :
- la figure 1 est une représentation partielle d'un fourgon destiné au transport de fret, plus particulièrement de la partie arrière du fourgon;
- la figure 2 est une représentation en coupe verticale d'un système de protection selon l'invention, monté dans la partie du fourgon de la figure 1 destinée au transport du fret;
- la figure 3 est une représentation en perspective d'un panneau de protection utilisé dans le système de la figure 2; et,
- les figures 4 et 5 représentent des modes d'assemblage différents de celui présenté à la figure 2 pour de système de protection selon l'invention.

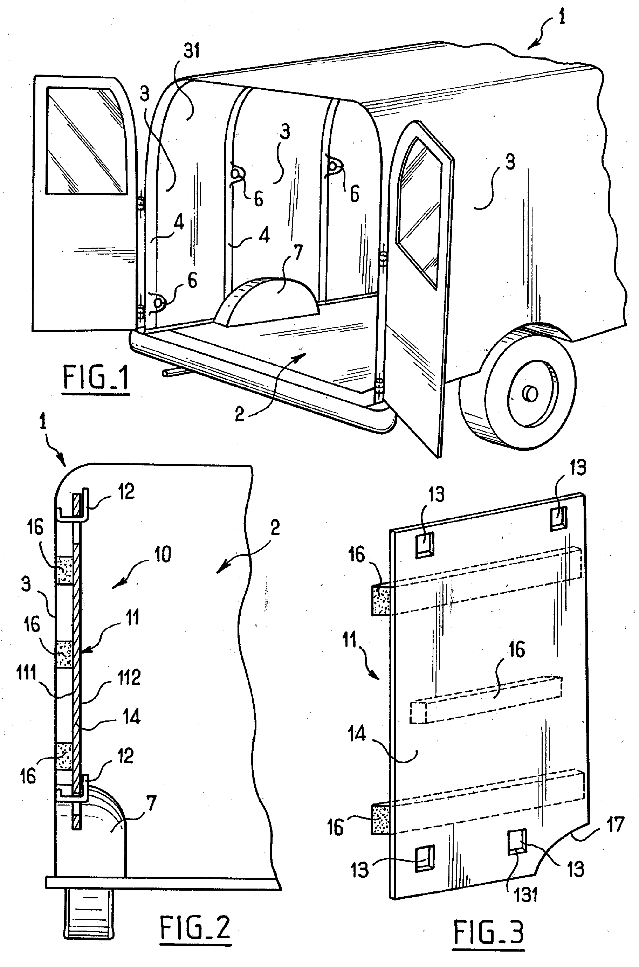

La figure 1 représente l'arrière d'un fourgon 1, et plus particulièrement un volume de transport 2 du fourgon 1, destiné à contenir du fret transporté par le fourgon. Le volume de transport 2 est défini latéralement par des tôles 3 de carrosserie, raidies de loin en loin par des montants 4. Les montants 4 comprennent des points d'arrimage 6 pour le fret.

La figure 2 est une coupe verticale et transversale du fourgon 1, équipé d'un système de protection 10 selon l'invention. Ce système de protection, comprend principalement un panneau de protection 11 et de moyens de maintien 12 pour maintenir le panneau 11. Le panneau 11 de la figure 2 est représenté en perspective à la figure 3. Pour maintenir chaque panneau il est prévu quatre crochets 12. Les crochets sont fixés à demeure sur la carrosserie du fourgon, par exemple par soudage.

Les panneaux sont de forme sensiblement rectangulaire. Ils ont une largeur suffisante pour protéger une tôle entre deux montants voisins. Ainsi, en laissant les montant apparents, le système de protection permet l'accès aux points d'arrimage 6.

Chaque panneau est principalement constitué d'une matière rigide, ici une plaque 14 en contre-plaqué, qui assure la résistance du panneau aux chocs et aux efforts exercés par le fret.

Chaque panneau comprend en outre des moyens d'accrochages constitués d'orifices 13 pour le passage des crochets depuis l'extérieur 111 du panneau, c'est à dire depuis sa face tournée vers l'extérieur du fourgon, jusqu'à l'intérieur 112 du panneau, c'est à dire sa face tournée vers l'intérieur du volume de transport. Deux des orifices 13 sont disposés à proximité d'un bord haut du panneau, chacun à proximité d'une extrémité du bord haut. Deux orifices sont disposés à proximité d'un bord bas du panneau, chacun à proximité d'une extrémité du bord bas.

Le panneau représenté à la figure 3 est prévu pour protéger une zone 31 de la tôle 3, à proximité d'un passage de roue 7 empiétant sur la zone 31. Une découpe 17 a donc été réalisée dans le contre-plaqué 14 pour laisser la place nécessaire au passage de roue. Cette découpe a pu être réalisée aisément, à l'aide d'une simple scie électrique, dans un panneau standard. Pour une meilleure tenue du panneau, l'orifice normalement situé dans la partie découpée a été remplacé par un autre orifice 131, situé dans la partie conservée, et le crochet correspondant disposé en conséquence.

Le panneau 11 comprend sur la face extérieure de la plaque 14, trois patins 16 horizontaux en une matière déformable, par exemple une mousse synthétique, de façon à épouser la forme de la tôle de carrosserie et à amortir les chocs et efforts transmis par la plaque 14 aux patins 16. On a de préférence choisi une matière élastiquement déformable afin d'assurer la pérennité du panneau.

Le système de protection 10 est conçu de sorte que, lorsque le panneau est en place sur les crochets 12, les patins 16, choisis en matière élastiquement déformable, soient maintenus comprimés, précontraints entre la tôle 3 et la plaque 14, même lorsque aucun effort n'est exercé sur la face intérieure de la plaque autre que l'effort de maintien exercé par les crochets 12. Ainsi, il n'apparaît pas de jeu entre les crochets et le panneau. Il n'y a donc pas de battement du panneau 11 entre les crochets 12 et la tôle 3 lorsque le fourgon roule. Ainsi le système de protection 10 reste silencieux.

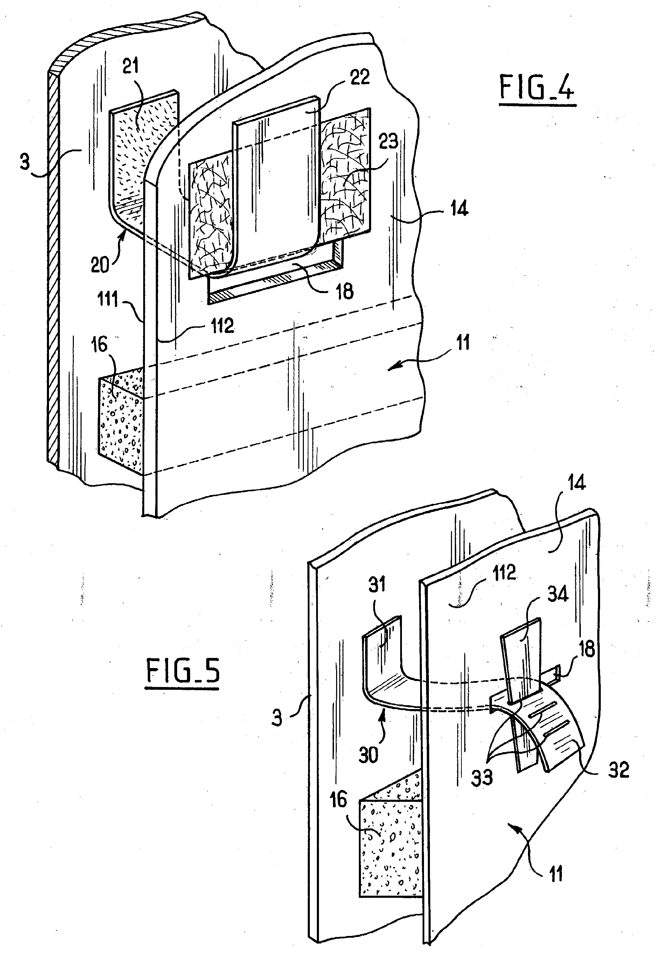

On va maintenant décrire deux autres modes de montage d'un panneau dans un système selon l'invention, en référence aux figures 4 et 5.

A la figure 4, le mode de montage comprend un complexe bi-constituants agrippant, par exemple de type Velcro™. Les moyens de maintien comprennent l'un des constituants sous la forme d'une sangle 20 dont une première extrémité 21 est fixée, par exemple par collage, sur la tôle 3. Les moyens d'accrochage comprennent l'autre constituant du complexe agrippant sous la forme d'un empiècement 23 collé sur la face intérieure de la plaque 14. Les moyens d'accrochage comprennent en outre un orifice pour le passage de la bande 20 depuis l'extérieur 111 du panneau, jusqu'à l'intérieur 112 du panneau. L'orifice, dans le mode de réalisation de la figure 4, a une forme de fente horizontale 18 située à proximité de l'empiècement 23.

Une deuxième extrémité 22 de la bande 20, débouchant à l'extérieur du panneau 14 au travers de la fente 18 est rabattue contre l'empiècement 23 pour s'y agripper. En maintenant une pression sur la face extérieure du panneau lorsque l'on rabat la sangle, cette pression est ensuite conservée sous la forme d'une précontrainte dans les patins 16 du panneau 11 lorsque la sangle est agrippée avec l'empiècement, évitant ainsi le battement du panneau contre la tôle.

A la figure 5, le mode de fixation comprend une sangle souple 30, par exemple en tissu ou cuir, dont une extrémité est fixée sur la tôle 3, par exemple par collage. Le panneau 14 comprend, comme à la figure précédente une fente 18 pour y faire passer une deuxième extrémité 32 de la sangle 30. Cette deuxième extrémité comprend des découpes 33 en forme d'ouies, s'étendant transversalement à la sangle et parallèlement au panneau dans sa position monté. Ces découpes permettent de glisser une goupille 34 de forme sensiblement aplatie au travers de la sangle de sorte que cette goupille 34, en prenant appui contre la face intérieure 112 de la plaque 14 empêche la sangle de se rétracter au travers de la fente 18, et assure le maintien du panneau.

Les découpes sont réparties longitudinalement sur la deuxième extrémité 32 de la sangle de sorte que la goupille 34 peut être glissée à une plus ou moins grande distance de la première extrémité 31 de la sangle 30. Ainsi, on peut choisir cette distance afin de maintenir précontraints les patins 16 du panneau 11.

Chaque panneau peut comprendre plusieurs des moyens de maintien et d'accrochage décrits aux figures 4 et 5, seuls ou en combinaison avec d'autres moyens, par exemple ceux décrit en référence aux figures 2 et 3.

Bien sûr, l'invention n'est pas limitée aux exemples qui viennent d'être décrits et de nombreux aménagements peuvent être apportés à ces exemples sans sortir du cadre de l'invention.

Ainsi, l'utilisation de panneaux selon l'invention n'interdit pas de fixer les panneaux de façon indémontable ou difficilement démontable, par exemple à l'aide d'une colle, sur la paroi à protéger.

L'utilisation de ces panneaux, n'est pas non plus limitée à la protection des parois d'un véhicule de transport, utilisation qui n'est donnée ici que comme un exemple d'une utilisation possible pour un tel système de protection. Ainsi, il peut être utile de protéger une pièce, par exemple pour y stocker provisoirement des biens ou des marchandises. Ainsi, un ou plusieurs panneaux pourront être disposés pour protéger les murs et fenêtres des chocs dus aux manipulations de ces biens ou de ces marchandises. Dans le domaine du bâtiment, une autre utilisation peut être la protection contre les chocs d'engins, par exemple en cours de construction d'un bâtiment, sur des parties déjà construites.

Les moyens d'accrochage et de maintien peuvent prendre d'autres formes, par exemple celle d'une barre ou d'un câble, fixé sur le véhicule et sur lequel viennent reposer des crochets d'un panneau. Plutôt que par un complexe agrippant ou au moyen d'une goupille, une sangle peut, par exemple, être liée au panneau par un ou plusieurs boutons pression, un dispositif type boucle de ceinture ou encore de la colle repositionnable ou pas.

La matière déformable peut ne pas constituer simplement des patins mais constituer l'ensemble de la face extérieure d'un panneau. Cette matière peut être uniquement plastiquement déformable ou présenter une élasticité partielle ou complète.

Au lieu qu'un seul panneau réalise la hauteur complète nécessaire à la protection, il peut être prévu plusieurs panneaux pour réaliser la même hauteur de protection, diminuant ainsi le poids de chacun des panneaux, et en facilitant le changement. Plusieurs panneaux peuvent aussi être prévus pour une même largeur de protection. On peut ainsi augmenter le caractère modulaire du système de protection et utiliser un nombre réduit de modèle de panneaux standardisés, en nombre suffisant pour réaliser la surface de protection, seuls des panneaux de rive pouvant nécessiter une découpe particulière. On peut ainsi utiliser un seul modèle de panneau. Il peut aussi être prévu des moyens pour solidariser des panneaux entre eux, ce qui permet de diminuer le nombre des moyens de maintien et d'accrochage, et aussi d'éviter des mouvements relatifs des panneaux entre eux, mouvements qui peuvent générer du bruit par exemple.

Au lieu d'une plaque, la matière rigide peut former une surface non-plane. Elle peut être habillée d'une matière apte à en diminuer la dureté pour ne pas endommager un fret fragile.

La matière déformable des patins peut aussi être, au moins partiellement, plastiquement déformable afin que la forme des patins s'adapte à la forme de la tôle 3, pour une meilleure répartition des efforts sur la tôle à protéger. Le nombre de patins n'est pas non plus limité à trois, il peut être différent. En particulier, il peut n'y avoir qu'un seul patin occupant sensiblement la totalité de la face extérieure de la plaque en contre-plaqué, assurant aussi une meilleure répartition des efforts sur la tôle à protéger.

Le contre-plaqué ou une autre matière rigide formant la structure du panneau peut comprendre des moyens de préhension pour permettre de manipuler le panneau, lors de sa pose ou de sa dépose sans risque de pincement de doigts, par exemple entre le panneau et un montant. Ces moyens de préhension peuvent être constitués par des orifices complémentaires pour le passage des mains au travers du contre-plaqué.

## Revendications

1. Système de protection (10) pour l'intérieur d'un véhicule (1), **caractérisé en ce qu'**il comprend des panneaux (11) et des sangles (20,30) fixées sur le véhicule, lesdites sangles étant prévues pour maintenir lesdits panneaux solidaires du véhicule.

2. Système selon la revendication 1, **caractérisé en ce qu'**il comprend un seul modèle de panneaux.

3. Système selon l'une des revendications 1 ou 2, **caractérisé en ce que** les sangles et les panneaux comprennent un complexe agrippant (20,23).

4. Système selon l'une des revendications 1 à 3, caractérisé en ce chaque panneau comprend une fente (18) pour y faire passer au moins une sangle depuis une face extérieure (111) vers une face intérieure (112) dudit panneau.

5. Système selon la revendication 4, **caractérisé en ce que** les moyens de maintien comprennent en outre une goupille (34) prévue pour traverser l'au moins une sangle et prenant appui sur la face intérieure du panneau.

6. Système selon l'une des revendications 1 à 5, **caractérisé en ce qu'**il permet de laisser accès à des montants (4,6) du véhicule.

7. Système selon l'une des revendications 1 à 6, **caractérisé en ce qu'**il comprend des moyens pour solidariser des panneaux entre eux.

8. Panneau de protection pour l'intérieur d'un véhicule de transport, **caractérisé en ce qu'**il comprend des moyens pour être accroché dans ledit véhicule à l'aide de sangles.

9. Panneau selon la revendication 8, **caractérisé en ce que** la face intérieure dudit panneau est constituée d'une matière rigide (14).

10. Panneau selon la revendication 8 ou 9, **caractérisé en ce que** la face intérieure dudit panneau comprend une matière déformable (16).

11. Panneau selon la revendication 10, **caractérisé en ce que** la matière déformable forme au moins un patin (16) n'occupant qu'une partie de la face extérieure du panneau entre une paroi (3) du véhicule et la matière rigide.

12. Panneau selon l'une des revendications 8 à 11, **caractérisé en ce que** le panneau comprend au moins une fente (18) pour le passage de d'une sangle (20,30) au travers dudit panneau.

13. Panneau selon l'une des revendications 8 à 12, **caractérisé en ce qu'**il comprend au moins une partie (23) d'un complexe agrippant.

14. Panneau selon l'une des revendications 8 à 13, **caractérisé en ce qu'**il peut être découpé pour s'adapter à une forme (7) du véhicule.
